# EUROPEAN PATENT SPECIFICATION

(11) **EP 3 012 444 B1**
(45) Date of publication and mention of the grant of the patent: **13.06.2018**
(21) Application number: 15152700.9
(22) Date of filing: 27.01.2015
(51) Int. Cl.: F02M 21/02, F02B 19/10, F02B 19/12

(54) **Pre-combustion chamber assembly for internal combustion engines**
Vorverbrennungskammeranordnung für Verbrennungsmotoren
Ensemble chambre de précombustion pour moteurs à combustion interne

(30) Priority: 21.10.2014 EP 14189755
(43) Date of publication of application: 27.04.2016
(73) Proprietor: Caterpillar Energy Solutions GmbH, 68167 Mannheim (DE)
(72) Inventor: Maier, Thomas, 68309 Mannheim (DE)
(74) Representative: BRP Renaud & Partner mbB Rechtsanwälte Patentanwälte Steuerberater

(56) References cited:
- EP-A1- 2 787 192
- EP-A2- 2 735 717
- WO-A1-2006/043818
- JP-A- 2012 193 747
- JP-U- H0 465 922
- US-A1- 2014 251 259

## Description

### Technical Field

The present disclosure generally relates to a pre-combustion chamber assembly for internal combustion engines. The present disclosure further relates to an internal combustion engine, a pre-combustion chamber uppert part, and a pre-combustion chamber lower part.

### Background

Internal combustion engines running, for example, at least in part on gaseous fuel usually need an ignition device (also referred to as pre-combustion chamber assembly) to ignite the mixture of gaseous fuel and air. A pre-combustion chamber assembly including a pre-combustion chamber may have a spark plug partially protruding into the pre-combustion chamber. Such a pre-combustion chamber assembly may further include a fuel supply for supplying some amount of fuel into the pre-combustion chamber. Upon ignition of the fuel-air mixture within the pre-combustion chamber, the flames may advance through orifices provided in the pre-combustion chamber to the main combustion chamber, where the flames may ignite the main amount of fuel and air for operating the internal combustion engine.

US 2014/0251259 A1 discloses a pre-chamber system for an internal combustion engine. The pre-chamber system includes a riser channel for connecting the pre-chamber to a combustion chamber of the internal combustion engine and a guiding device for influencing a flow of the gas in the pre-chamber.

JP 2008-169706 A discloses a subsidiary chamber type engine including a main chamber facing a piston and an auxiliary chamber communicating with the main chamber via nozzle ports.

EP 2 735 717 A2 discloses a precombustion chamber structure for a gas engine including a precombustion chamber tip and a water jacket connected to the precombustion chamber tip. EP 2 787 192 A1 discloses a precombustion chamber structure according to the preamble of claim 1.

The present disclosure is directed, at least in part, to improving or overcoming one or more aspects of prior systems.

### Summary of the Disclosure

According to an aspect of the present disclosure, a pre-combustion chamber assembly for an internal combustion engine is disclosed. The pre-combustion chamber assembly may comprise a pre-combustion chamber lower part defining at least a portion of a pre-combustion chamber and a pre-combustion chamber upper part defining a remaining portion of the pre-combustion chamber and being mountable to the pre-combustion chamber lower part. The pre-combustion chamber upper part may include at least one fuel supply channel. The pre-combustion chamber lower part and the pre-combustion chamber upper part may define a longitudinal axis of the pre-combustion chamber assembly. The pre-combustion chamber assembly may further comprise at least one fuel accumulating chamber disposed in at least one of the pre-combustion chamber upper part and the pre-combustion chamber lower part and at least partially circumferentially extending about the longitudinal axis. The fuel accumulating chamber may be fluidly connected to the at least one fuel supply channel. The pre-combustion chamber assembly may further comprise at least one fuel passage disposed in at least one of the pre-combustion chamber upper part and the pre-combustion chamber lower part and configured to fluidly connect the at least one fuel accumulating chamber to the pre-combustion chamber. Each of the at least one fuel passage may extend along a respective fuel passage axis lying substantially in a plane perpendicular to the longitudinal axis.

According to another aspect of the present disclosure, an internal combustion engine may comprise at least one cylinder reciprocally receiving a piston, the at least one cylinder and the piston delimiting at least one main combustion chamber, and at least one pre-combustion chamber assembly according to the present disclosure. The at least one pre-combustion chamber assembly may at least partially protrude into the at least one main combustion chamber.

According to another aspect of the present disclosure, a pre-combustion chamber upper part of a pre-combustion chamber assembly of an internal combustion engine is disclosed. The pre-combustion chamber upper part may be configured to be mounted to a pre-combustion chamber lower part of the pre-combustion chamber assembly including a pre-combustion chamber. The pre-combustion chamber upper part may comprise a pre-combustion chamber upper part body having a longitudinal axis and defining at least a portion of the pre-combustion chamber. The pre-combustion chamber upper part body may include at least one fuel supply channel. The pre-combustion chamber upper part may further comprise at least one fuel accumulating chamber at least partially circumferentially extending about the longitudinal axis and at least partially formed in the pre-combustion chamber upper part body. The at least one fuel accumulating chamber may be fluidly connected to the at least one fuel supply channel. The pre-combustion chamber upper part may further comprise at least one fuel passage at least partially formed in the pre-combustion chamber upper part body. The at least one fuel passage may be configured to fluidly connect the at least one fuel accumulating chamber to the pre-combustion chamber. Each of the at least one fuel passage may extend along a fuel passage axis lying substantially in a plane perpendicular to the longitudinal axis.

According to another aspect of the present disclosure, a pre-combustion chamber lower part of a pre-combustion chamber assembly of an internal combustion engine is disclosed. The pre-combustion chamber lower part may be configured to be mounted to a pre-combustion chamber upper part of the pre-combustion chamber assembly including a pre-combustion chamber. The pre-combustion chamber lower part may comprise a pre-combustion chamber lower part body having a longitudinal axis and defining at least a portion of the pre-combustion chamber. The pre-combustion chamber lower part may further comprise at least one fuel accumulating chamber at least partially circumferentially extending about the longitudinal axis and at least partially formed in the pre-combustion chamber lower part body. The pre-combustion chamber lower part may further comprise at least one fuel passage at least partially formed in the pre-combustion chamber lower part body. The at least one fuel passage may be configured to fluidly connect the at least one fuel accumulating chamber to the pre-combustion chamber. Each of the at least one fuel passage may extend along a fuel passage axis lying substantially in a plane perpendicular to the longitudinal axis.

Other features and aspects of this disclosure will be apparent from the following description and the accompanying drawings.

### Brief Description of the Drawings

Fig. 1 is a diagrammatic cross-sectional view of an internal combustion engine with a pre-combustion chamber assembly installed in a cylinder head of the internal combustion engine;
Fig. 2 is a diagrammatic cross-sectional view of the cylinder head with an installed pre-combustion chamber assembly shown in greater detail;
Fig. 3 is a cross-sectional view of the pre-combustion chamber assembly of Fig. 2 including a pre-combustion chamber upper part according to an embodiment of the present disclosure;
Fig. 4 is a partial cross-sectional view of the pre-combustion chamber upper part taken along line I - I of Fig. 3;
Fig. 5 is a partial cross-sectional view of the pre-combustion chamber upper part according to another aspect of the present disclosure;
Fig. 6 is a cross-sectional view of the pre-combustion chamber assembly including a pre-combustion chamber upper part according to another embodiment of the present disclosure;
Fig. 7 is a detailed view of a section of Fig. 6 indicated by circle "Z";
Fig. 8 is a partial cross-sectional view of the pre-combustion chamber upper part taken along line II - II of Fig. 6;
Fig. 9 is a partial cross-sectional view of the pre-combustion chamber upper part according to another aspect of the present disclosure;
Fig. 10 is a partial cross-sectional view of the pre-combustion chamber upper part according to another aspect of the present disclosure; and
Fig. 11 is a partial cross-sectional view of the pre-combustion chamber upper part according to another aspect of the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that by providing at least one fuel passage at an interface between a pre-combustion chamber upper part and a pre-combustion chamber lower part of a pre-combustion chamber assembly fuel may be supplied more reliably to a pre-combustion chamber assembly.

The present disclosure may further be based at least in part on the realization that the supply of fuel may be improved, if the at least one fuel passage may extend along an axis lying in a plane substantially perpendicular to a longitudinal axis defined by the pre-combustion chamber upper and lower parts. Because, if the at least one fuel passage extends in a plane substantially perpendicular to the longitudinal axis, all fuel supplied to the pre-combustion chamber by the at least one fuel passage solely has a momentum component in a plane perpendicular to the longitudinal axis. Thus, all fuel supplied to the pre-combustion chamber may enter the upper part of the pre-combustion chamber defined by the pre-combustion chamber upper part, and may not bypass the upper part of the pre-combustion chamber through orifices formed in a lower part of the pre-combustion chamber. As a consequence, the supplied fuel may flush the pre-combustion chamber more effectively, and enrich the fuel-air mixture in the pre-combustion chamber more efficiently.

However, providing a fuel passage in a plane substantially perpendicular to a longitudinal axis defined by the pre-combustion chamber upper and lower parts may be subject to manufacturing limitations. For example, during manufacturing of the fuel passage a misplacement of the fuel passage may occur.

The present disclosure may, thus, further be based at least in part on the realization that a fuel passage lying in a plane substantially perpendicular to the longitudinal axis may be provided more reliably, if the fuel passage is formed at the interface between the pre-combustion chamber upper and lower parts. Because in this case the fuel passage may be provided with less mechanical effort, for example, by milling a slot at the interface between the pre-combustion chamber upper part and the pre-combustion chamber lower part.

The present disclosure may further be based at least in part on the realization that by disposing the at least one fuel passage in a skew manner with respect to the longitudinal axis, a swirling flow of the injected fuel may be produced, which, in turn, may increase turbulence within the pre-combustion chamber and, thus, enhance mixing of the injected fuel with the fuel-air mixture already present in the pre-combustion chamber.

The present disclosure may further be based at least in part on the realization that the at least one fuel accumulating chamber may be formed by merging the at least one fuel supply channel with the at least one fuel passage. When the at least one fuel supply channel is defined by the merging region of at least one fuel supply channel and the at least one fuel passage, no additional manufacturing steps are required to form the fuel accumulating chamber and, hence, manufacturing of the pre-combustion chamber may be more efficient.

The present disclosure may further be based at least in part on the realization that depending on the flow rates of fuel supplied to the pre-combustion chamber, the at least one fuel passage may be sized such that flames generated within the pre-combustion chamber may be extinguished in the at least one fuel passage, and, thus, a flashback of flames in the at least one fuel accumulating chamber or the at least one fuel supply channel may be prevented. Particularly, the pre-combustion chamber upper and lower part bodies including the at least one fuel passage may absorb flame heat, thereby quench the flames and eventually extinguish the flames. Since the flames may be extinguished in the at least one fuel passage, ignition of the remaining fuel within the fuel passages may be prevented which may lead to less generation of soot.

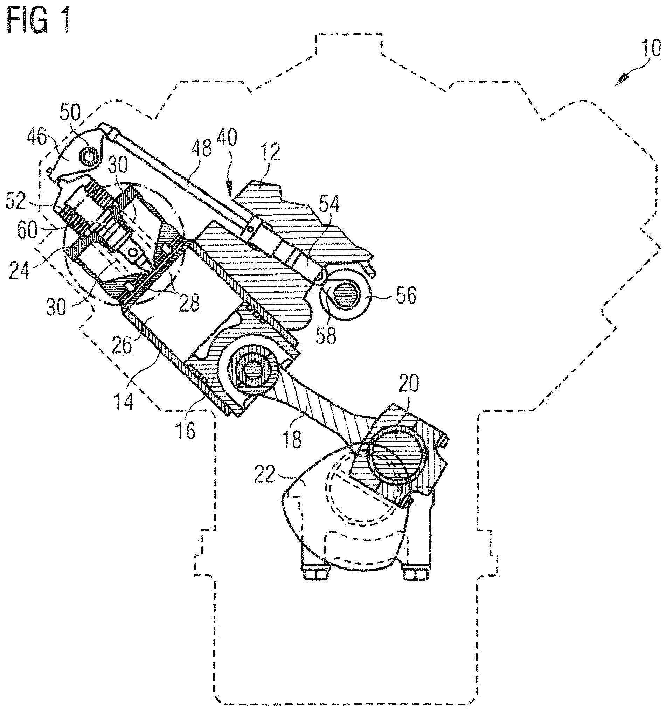

Referring now to the drawings, an exemplary embodiment of an internal combustion engine 10 is illustrated in Fig. 1. The internal combustion engine 10 may include features not shown, such as fuel systems, air systems, cooling systems, peripheries, drivetrain components, turbochargers, etc. For the purpose of the present disclosure, the internal combustion engine 10 is considered a four-stroke gaseous fuel internal combustion engine. One skilled in the art will recognize, however, that the gaseous fuel internal combustion engine 10 may be any type of engine (two-stroke, turbine, gas, diesel, natural gas, propane, etc.) that would utilize a pre-combustion chamber. Furthermore, the internal combustion engine 10 may be of any size, with any number of cylinders, and in any configuration ("V", in-line, radial, etc.). The internal combustion engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

The internal combustion engine 10 may include an engine block 12 having a plurality of cylinders 14 (one of which is illustrated in Fig. 1). A piston 16 may be slidably disposed within the cylinder (or cylinder liner) 14 to reciprocate between a top-dead-center position and a bottom-dead-center position. A connecting rod 18 may connect the piston 16 to an eccentric crankpin 20 of a crankshaft 22 such that reciprocating motion of piston 16 may result in rotation of the crankshaft 22.

The internal combustion engine 10 may also include a cylinder head 24 engaged with the engine block 12 to cover the cylinder 14, thereby delimiting a main combustion chamber 26. The cylinder head 24 may define intake and exhaust openings 28 that may allow intake gases into the main combustion chamber 26 and exhaust gases out of the main combustion chamber 26, respectively. Engine valves 30 may be positioned to selectively open and close the openings 28. Each cylinder 14 may include multiple intake and exhaust openings 28.

The internal combustion engine 10 may include a series of valve actuation assemblies 40 (one of which is illustrated in Fig. 1). The multiple valve actuation assemblies 40 may be provided per cylinder 14. For example, one valve actuation assembly may be used to open and close the intake valves and another valve actuation assembly may be provided to open and close the exhaust valves.

The valve actuation assembly 40 may include a rocker arm 46. The rocker arm 46 may be pivotally mounted in the cylinder head 24 and may attach to the engine valves 30 at one end and may attach to a push rod 48 at the other end. Oscillation of rocker arm 46 about its pivot point 50 may cause the engine valves 30 to move between an open position and a closed position. The valve actuation assembly 40 may also include valve springs 52 that may bias the engine valves 30 toward the closed position (i.e. closing the intake and exhaust openings 28).

The other end of the push rod 48 may engage a lifter 54 which may engage a camshaft 56. The camshaft 56 may operatively engage the crankshaft 22. The camshaft 56 may be connected with crankshaft 22 in any manner readily apparent to one skilled in the art where rotation of the crankshaft 22 may result in rotation of the camshaft 56. For example, camshaft 56 may be connected to crankshaft 22 through a gear train (not shown).

As shown in Fig. 1, a first cam lobe 58 may be disposed on the camshaft 56 to engage the lifter 54. One skilled in the art may recognize that the camshaft 56 may include additional cam lobes to engage with other lifters in order to actuate additional engine valves.

The internal combustion engine 10 may also include a pre-combustion chamber assembly 60 (also referred to as pre-combustion chamber ignition device), which is positioned within the cylinder head 24 between the engine valves 30. The pre-combustion chamber assembly 60 may be configured in a variety of ways. Any assembly capable of being positioned in the cylinder head 24 to support a combustion event outside of the main combustion chamber 26, and direct the combustion into the main combustion chamber 26 may be used.

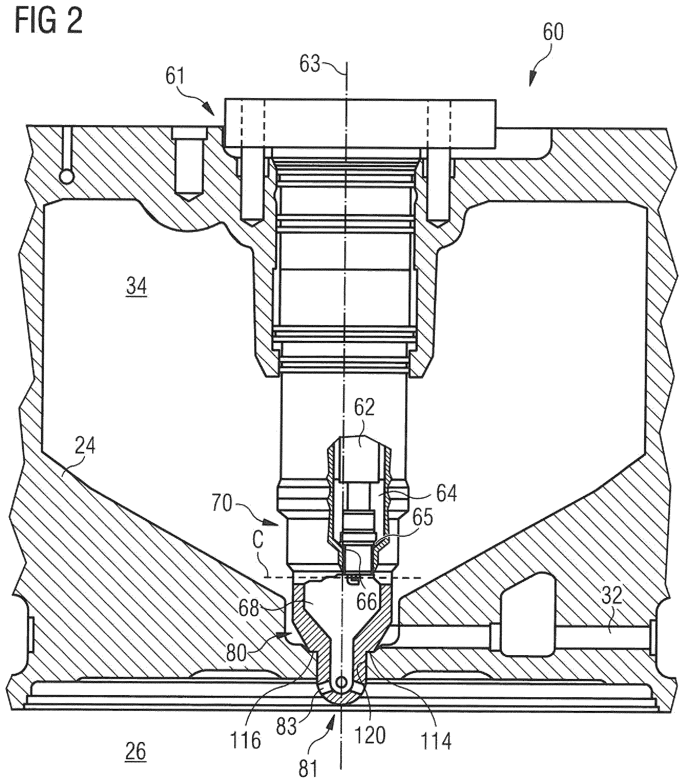

With reference to Fig. 2, the pre-combustion chamber assembly 60 of Fig. 1 is shown in greater detail. The pre-combustion chamber assembly 60 defining a longitudinal axis 63 may extend from the cylinder head 24 into the main combustion chamber 26. In the depicted embodiment, the pre-combustion chamber assembly 60 may comprise a pre-combustion chamber upper part 70 and a pre-combustion chamber lower part 80 detachably mounted to the pre-combustion chamber upper part 70. As illustrated in Fig. 2, the pre-combustion chamber upper part 70 is disposed above the pre-combustion chamber lower part 80. In Fig. 2, a separation between the pre-combustion chamber upper part 70 and the pre-combustion chamber lower part 80 is indicated by a dotted line C.

The pre-combustion chamber assembly 60 may be attached to the cylinder head 24 via, for example, a fastening device 61. In the assembled state, the fastening device 61 may at least partially press the pre-combustion chamber assembly 60 towards the main combustion chamber 26 (in Fig. 2 in a downward direction). On the opposite side, the pre-combustion chamber assembly 60 contacts a flange 114, such that the pre-combustion chamber upper and lower parts 70, 80 are at least partially compressed, thereby forming a robust device. In this state, the pre-combustion chamber upper and lower parts 70, 80 are relatively fixed to one another with respect to axial displacement and rotation. The pre-combustion chamber upper part 70 may be generally cylindrical and may be made of any suitable material.

The flange 114 may be sealed against the main combustion chamber 26. The flange 114 may extend transversely relative to the longitudinal axis 63 and may be provided to seal against a sealing surface 116 provided in the cylinder head 24 to prevent leakage between the main combustion chamber 26 and first and second cooling fluid passages 32, 34.

The pre-combustion chamber upper part 70 may be configured to accommodate a spark plug 62 therein such that a sparking end of the spark plug 62 at least partially protrudes into a pre-combustion chamber 68 provided within the pre-combustion chamber assembly 60. The spark plug 62 in the context of this invention may mean any suitable ignition device available in the art.

The pre-combustion chamber lower part 80 may be generally cylindrical and is mountable to the pre-combustion chamber upper part 70. Preferably, the pre-combustion chamber lower part 80 may be detachably mountable to the pre-combustion chamber upper part 70. This may allow replacing of, for example, the pre-combustion chamber lower part 80 by a new pre-combustion chamber lower part in the case of wear of the pre-combustion chamber lower part 80, especially in the case of wear of a pre-combustion chamber tip 81 or the orifices 83. For instance, after a usage time of, for example, about 15.000 hours of engine operation, the pre-combustion chamber lower part 80 may be replaced. The pre-combustion chamber lower part 80 may be cast to the general configuration and subsequently machined to final dimensions where required. In some embodiments, the pre-combustion chamber lower part 80 may be machined out of a solid material block. In some further embodiments, the pre-combustion chamber lower part 80 may be sintered, or manufactured in any other suitable way known in the art.

The pre-combustion chamber upper part 70 may have a stepped bore 64 that may be adapted to receive the spark plug 62. The stepped bore 64 may have a spark plug mounting bore 66 adapted to receive an end of the spark plug 62. The spark plug mounting bore 66 may include a thread adapted to engage with a thread on the end of the spark plug 62. The stepped bore 64 may define a sealing surface 65 that may be adapted to sealingly contact the spark plug 62.

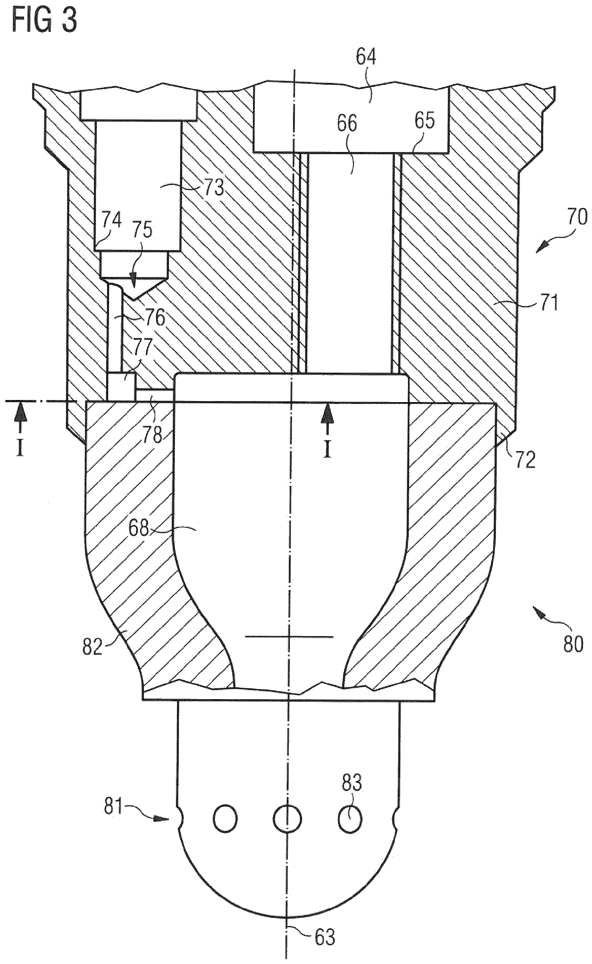

Referring to Fig. 3, a cross-sectional view of the pre-combustion chamber assembly 60 is illustrated. The pre-combustion chamber lower part 80 includes a pre-combustion chamber tip 81 which is generally cylindrical and which may at least partially protrude into the main combustion chamber 26 through a bore 120 provided in the cylinder head 24.

The pre-combustion chamber upper part 70 and the pre-combustion chamber lower part 80 each define at least a portion of a pre-combustion chamber 68. Particularly, the pre-combustion chamber lower part 80 defines at least a portion of the pre-combustion chamber 68, and the pre-combustion chamber upper part 70 defines a remaining portion of the pre-combustion chamber 68. Thus, the pre-combustion chamber upper and lower parts 70, 80 together define the pre-combustion chamber 68. The electrode end of the spark plug 62 may at least partially protrude into the pre-combustion chamber 68 (see Fig. 2).

The pre-combustion chamber tip 81 having a substantially dome-like shape may include a plurality of spaced apart, radially oriented orifices 83. The plurality of orifices 83 may fluidly connect the pre-combustion chamber 68 to the main combustion chamber 26. The plurality of orifices 83 may be configured to direct burning fuel, for example, expanding gases from the pre-combustion chamber 68 in a predetermined pattern into the main combustion chamber 26 and to direct a fuel-air mixture from the main combustion chamber 26 into the pre-combustion chamber 68.

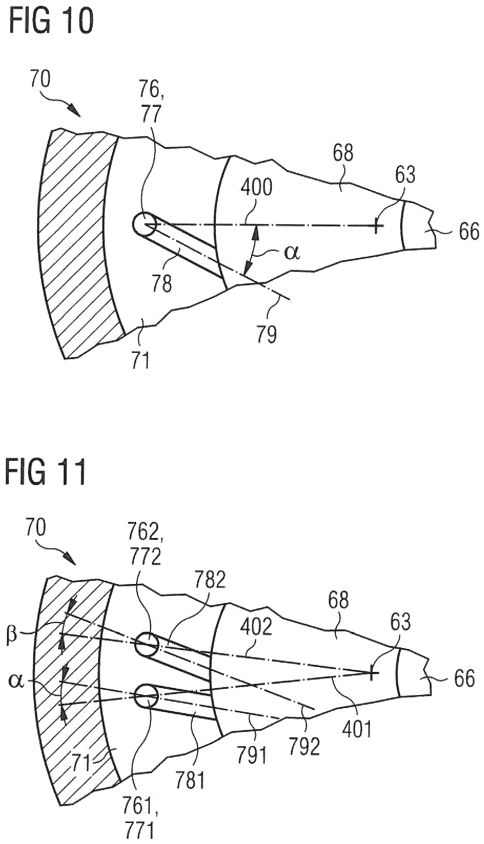

As further shown in Fig. 3, the pre-combustion chamber upper part 70 includes a pre-combustion chamber upper part body 71 and a fuel supply channel 76 fluidly connected to the pre-combustion chamber 68 and to a fuel system (not explicitly shown in the drawings) including, for example, a fuel reservoir, fuel pumps, control valves, and some further elements configured to provide fuel to the pre-combustion chamber 68. The fuel supply channel 76 is configured to receive, for example, gaseous fuel and supply the fuel into the pre-combustion chamber 68. The fuel supply channel 76 may be further configured to accommodate a control valve (not shown in Fig. 3) at a control valve receiving portion 73 for controlling the supply of fuel into the pre-combustion chamber 68. Control valve receiving portion 73 may include a stepped bore with a sealing surface 74 for sealing engagement with the control valve. In some embodiments, as shown, for example, in Fig. 10, the pre-combustion chamber upper part 70 may include more than one fuel supply channel 76. Each of the fuel supply channels 76 are in fluid connection with control valve receiving portion 73 via a control valve connection portion 75.

The pre-combustion chamber upper part 70 is mountable to the pre-combustion chamber lower part 80 via, for instance, welding, soldering, screwing, bolting, form-fitting, or any other suitable fixing means. The pre-combustion chamber lower part 80 includes a pre-combustion chamber lower part body 82 configured to engage with an annular protrusion 72 of the pre-combustion chamber upper part 70. For example, the pre-combustion chamber upper and lower parts 70, 80 are mounted to one another via a thread (not shown in the drawings) provided on an inner circumferential face of the annular protrusion 72 and on an outer circumferential face of the pre-combustion chamber lower part body 82. In some embodiments, the pre-combustion chamber upper and lower parts 70, 80 are mounted to one another by welding, particularly via a laser beam weld extending about the outer circumference of the pre-combustion chamber upper and lower parts 70, 80.

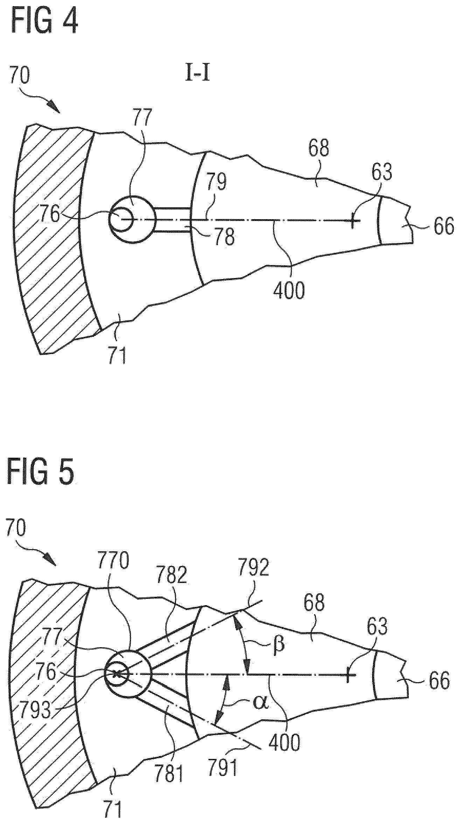

As further illustrated in Fig. 3, the pre-combustion chamber upper part body 71 includes at least one fuel passage 78 provided at an interface between the pre-combustion chamber upper part 70 and the pre-combustion chamber lower part 80. In the embodiment shown in Fig. 3, the at least one fuel passage 78 is formed in the pre-combustion chamber upper part body 71. As illustrated, the pre-combustion chamber upper part body 71 includes one fuel passage 78. In some embodiments, the pre-combustion chamber upper part body 71 may include more than one fuel passage 78, as will be shown later when referring, for example, to Fig. 5, 10 and 11. Fuel passages 78 may further include different sizes. In some embodiments, instead of being formed in the pre-combustion chamber upper part body 71, the at least one fuel passage 78 may at least partially be formed in the pre-combustion chamber lower part body 82.

As can be seen, fuel passage 78 lies in a plane substantially perpendicular to longitudinal axis 63. Thus, all fuel supplied to pre-combustion chamber 68 by fuel passage 78 via fuel supply channel 76 has a momentum component solely in the plane perpendicular to longitudinal axis 63. As a consequence, fuel supplied to pre-combustion chamber 68 enters pre-combustion chamber 68 solely in an upper part of pre-combustion chamber 68 defined by pre-combustion chamber upper part 70, and does not flow in a lower part of pre-combustion chamber 68 defined by pre-combustion chamber lower part 80, thereby not bypassing pre-combustion chamber 68 and exiting pre-combustion chamber 68 through orifices 83. By forming fuel passage 78 such that fuel passage 78 lies in a plane substantially perpendicular to longitudinal axis 63, fuel supplied to pre-combustion chamber 68 may, therefore, have a larger residence time compared to fuel entering pre-combustion chamber 68 with a momentum component also in axial direction with respect to longitudinal axis 63.

The pre-combustion chamber upper part body 71 further defines and includes a fuel accumulating chamber 77. Fuel accumulating chamber 77 is configured to fluidly connect the at least one fuel supply channel 76 with the at least one fuel passage 78. Fuel accumulating chamber 77 is disposed at the interface between the pre-combustion chamber upper part 70 and the pre-combustion chamber lower part 80 radially outward of the pre-combustion chamber 68. Fuel accumulating chamber 77 has an axial extension, when viewed in axial direction with respect to longitudinal axis 63 that is, in this specific embodiment, larger than an axial extension of fuel passage 78. In some embodiments, the axial extension of fuel accumulating chamber 77 may be the same or smaller than an axial extension of fuel passage 78. Moreover, fuel accumulating chamber 77 has a radial extension, when viewed in radial direction with respect to longitudinal axis 63, which is, in this specific embodiment, larger than a radial extension of fuel supply channel 76. Moreover, fuel accumulating chamber 77 extends at least partially circumferentially about the longitudinal axis 63, as will be seen more clearly when referring to Fig. 4.

In some embodiments, a seal ring (not shown) may be disposed between the pre-combustion chamber upper and lower parts 70, 80 configured to seal fuel accumulating chamber 77 against the environement, particularly against second cooling fluid passage 34 (see Fig. 2). The seal ring may be radially outward of fuel accumulating chamber 78 with respect to longitudinal axis 63, disposed in a groove (not shown) formed on one of the pre-combustion chamber upper or lower parts 70, 80. In some embodiments, where pre-combustion chamber upper and lower parts 70, 80 are welded to one another, a seal ring may not be provided.

In Fig. 4, a partial cross-sectional view of the pre-combustion chamber upper part 70 taken along line I - I of Fig. 3 is shown. Elements already explained have the same reference numerals, such as pre-combustion chamber 68, or spark plug mounting bore 66.

As illustrated in Fig. 4, fuel accumulating chamber 77 extends in circumferential direction with respect to longitudinal axis 63. For example, fuel accumulating chamber 77 extends about 10° or more in circumferential direction with respect to longitudinal axis 63. Fuel accumulating chamber 77 fluidly connects fuel supply channel 76 with fuel passage 78. Fuel accumulating chamber 77 may therefore have a cross-sectional area that is formed such that fuel accumulating chamber 77 may at least partially connect with fuel supply channel 76 and fuel passage 78. In the embodiment shown in Fig. 4, fuel accumulating chamber 77 has a circular cross-section with a diameter larger than a diameter of fuel supply channel 76 and fuel passage 78. In some embodiments, fuel accumulating chamber 77 may have the same or smaller diameters than fuel supply channel 76 and/or fuel passage 78. Fuel accumulating chamber 77, may be, for example, a bore with circular cross-section. In some embodiments, fuel accumulating chamber 77 may have other cross-sections such as a rectangular cross-section, an oval cross-section, or any other cross-section suitable for fluidly connecting fuel supply channel 76 with fuel passage 78. For example, fuel accumulating chamber 77 may be a pocket formed in the pre-combustion chamber upper part 70 extending from the interface between pre-combustion chamber upper and lower parts 70, 80 in axial direction with respect to longitudinal axis 63.

Furthermore, fuel passage 78 extends along a fuel passage axis 79 extending in a radial direction 400 with respect to longitudinal axis 63. As mentioned, fuel passage 78 is in fluid connection with fuel accumulating chamber 77. Fuel passage 78 may include a circular cross-section, a semi-circular cross-section, an oval cross-section, a rectangular cross-section, or any other cross-sectional shape suitably for fluidly connecting the fuel accumulating chamber 77 to the pre-combustion chamber 68. For example, fuel passage 78 may be a drilled bore, a channel or the like. In some embodiments, fuel passage 78 may be milled at the interface between the pre-combustion chamber upper and/or lower parts 70, 80.

Fuel supply channel 76 may include a diameter ranging from, for example, about 1 mm to about 5 mm, or more, for example, 8 mm. Fuel accumulating chamber 77 may include a cross-sectional area ranging from, for example, 0.75 mm² to about 20 mm², and fuel passage 78 may include a cross-sectional area from, for example, 0.1 mm² to about 20 mm². Fuel supply channel 76, fuel accumulating chamber 77, and/or fuel passage 78 may have the same or different sizes.

Fig. 5 illustrates another embodiment of the present disclosure, where fuel passage 78 includes a first fuel passage 781 and a second fuel passage 782. First and second fuel passages, 781, 782 are in fluid connection with fuel accumulating chamber 77. In the embodiment shown, first and second fuel passages 781, 782 connect with fuel accumulating chamber 77 via a boundary 770 defining fuel accumulating chamber 77 within pre-combustion chamber upper part body 71. In some embodiments, more than two fuel passages, for example, three, four, or more fuel passages may be in fluid connection with fuel accumulating chamber 77, depending on fuel flow rates and dimensions of pre-combustion chamber 68.

As can be seen, first fuel passage 781 extends along a first fuel passage axis 791, and second fuel passage 782 extends along a second fuel passage axis 792. Both first and second fuel passage axes 791, 792 extend in a skew manner with respect to longitudinal axis 63. Thus, neither first nor second fuel passage axes 791, 792 intersect with longitudinal axis 63.

First fuel passage axis 791 forms a first angle α with a radial direction 400 of longitudinal axis 63, and second fuel passage axis 792 forms a second angle β with radial direction 400 of longitudinal axis 63. First angle α may be in the range from about 0° to about 60°, and second angle β may be in the range from about 0° to about 60°.

First and second fuel passage axes 791, 792 intersect at a common point 793, thereby forming a V-shaped configuration. By supplying fuel in a V-shaped configuration, fuel admitted to pre-combustion chamber 68 via first fuel passage 781 produces a first vortex in pre-combustion chamber 68, and fuel admitted to pre-combustion chamber 68 via second fuel passage 782 forms a second vortex in pre-combustion chamber 68 counter-rotating to first vortex. By producing two counter-rotating vortices, turbulence in pre-combustion chamber 68 may be increased and mixing may be enhanced.

As can be seen in Fig. 5, common point 793 is disposed within fuel accumulating chamber 77 and within fuel supply channel 76. In some embodiments, common point 793 may be disposed outside of fuel supply channel 76 and/or outside of fuel accumulating chamber 77.

First and second angles α, β may have the same size, as shown in Fig. 5, or may have different sizes. In some embodiments, just one of the first and second fuel passage axes 791, 792 may extend in a skew manner with respect to longitudinal axis 63, whereas the other of the first and second fuel passage axes 791, 792 may extend in radial direction with respect to longitudinal axis 63, depending on the flow profiles and turbulence levels to be achieved in pre-combustion chamber 68. For example, one of first and second angles α, β may be 0°, and the other of the first and second angles α, β may be larger than 0°.

In some embodiments, one of first and second angles α, β may be smaller than 0°, for example, -5° or less.

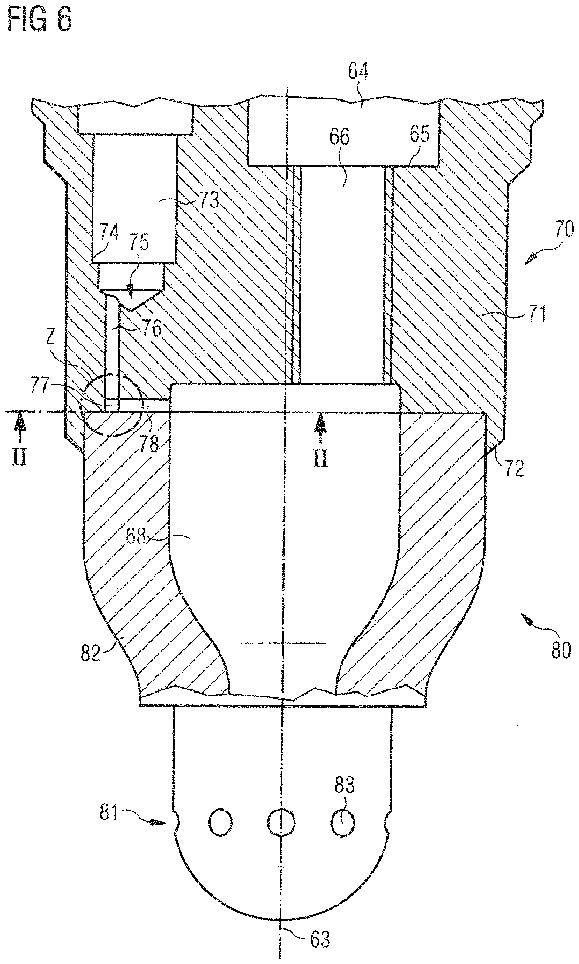

Fig. 6 is a cross-sectional view of the pre-combustion chamber assembly 60 similar to Fig. 3. The pre-combustion chamber assembly 60 of Fig. 6 differs from that of Fig. 3 in that the fuel accumulating chamber 77 is defined solely by a merging region of fuel supply channel 76 and fuel passage 78. Again, elements already explained have the same reference numerals.

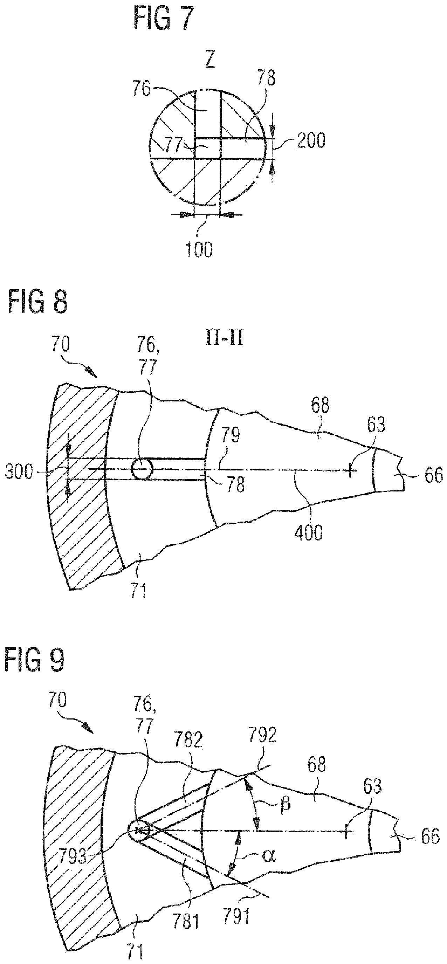

To better illustrate the merging region, Fig. 7 shows a detailed view of fuel accumulating chamber 77 indicated by circle "Z" in Fig. 6. As can be seen, fuel accumulating chamber 77 is formed by merging fuel supply channel 76 with fuel passage 78. Thus, fuel accumulating chamber 77 is reduced to the merging region formed by the intersection of fuel supply channel 76 and fuel passage 78, as indicated by the rectangle. By merging fuel supply channel 76 with fuel passage 78 without separately forming fuel accumulating chamber 77, manufacturing steps during manufacturing of pre-combustion chamber assembly 60 may be reduced. For example, merging of fuel supply channel 76 and fuel passage 78 may be achieved by drilling a bore in pre-combustion chamber upper part body 71 to form fuel supply channel 76, and milling the interface between pre-combustion chamber upper and lower parts 70, 80 to form fuel passage 78.

The merging region of fuel supply channel 76 and fuel passage 78 may also be explained with reference to Fig. 8 which shows a partial cross-sectional view of the pre-combustion chamber upper part 70 taken along line II - II of Fig. 6. As such, merging region includes a radial extension 100 (see Fig. 7), an axial extension 200 (see Fig. 7), and a circumferential extension 300 (see Fig. 8). When fuel supply channel 76 is merged with fuel passage 78 to form fuel accumulating chamber 77 as explained, radial extension 100 has the same size as a radial extension of fuel supply channel 76, axial extension 200 has the same size as an axial extension of fuel passage 78 and circumferential extension 300 has the same size as a circumferential extension of fuel passage 78. Radial, axial and circumferential extensions and radial, axial and circumferential directions are all referred to with respect to longitudinal axis 63.

In some embodiments, such as the one shown in Fig. 5 where fuel passage 78 includes first and second fuel passages 781, 782, the merging region defining fuel accumulating chamber 77 is formed by first fuel passage 781, second fuel passage 782 and fuel supply channel 76. This is illustrated more clearly, for example, in Fig. 9, which shows the V-shaped configuration of Fig. 5 except that in Fig. 9 fuel accumulating chamber 77 is reduced to the merging region of first fuel passage 781, second fuel passage 782 and fuel supply channel 76. Thus, in the embodiment of Fig. 9, fuel accumulating chamber 77 is solely defined by merging first fuel passage 781, second fuel passage 782 and fuel supply channel 76. The embodiment shown in Fig. 9 may be manufactured, for example, by drilling a bore in pre-combustion chamber upper part body 71 to form fuel supply channel 76, and milling the interface between pre-combustion chamber upper and lower parts 70, 80 twice to form first fuel passage 781 and second fuel passage 782.

In some embodiments where fuel passage 78 includes more than two fuel passages, fuel accumulating chamber 77 is defined by merging the plurality of fuel passages with fuel supply channel 76. Again, the plurality of fuel passages may be manufactured, for example, by milling the interface between pre-combustion chamber upper and lower parts 70, 80 multiple times.

Fig. 10 shows another embodiment of pre-combustion chamber upper part 70 including a single fuel passage 78 merging with fuel supply channel 76 to form fuel accumulating chamber 77. Again, in the embodiment shown, fuel accumulating chamber 77 is defined solely by the merging region of fuel supply channel 76 and fuel passage 78. Moreover, fuel passage 78 extends along fuel passage axis 79 extending in a skew manner with respect to a radial direction 400 of longitudinal axis 63. Angle α between fuel passage axis 79 and radial direction 400 may be in the range from about 0° to about 60°.

By disposing fuel passage 78 in a skew manner with respect to longitudinal axis 63, a swirling motion may be imparted on the fuel admitted to pre-combustion chamber 68. The swirling motion may increase turbulence within pre-combustion chamber 68 and, thus, enhance mixing of the admitted fuel with the fuel-air mixture already present in pre-combustion chamber 68. As shown in Fig. 10, the swirl is in counter-clockwise direction with respect to Fig. 10. In some embodiments, the swirl may be in clockwise direction. Thus, angle α between fuel passage axis 79 and radial direction 400 may also be in the range from about -60° to about 0°.

Fig. 11 shows another embodiment of pre-combustion chamber upper part 70 similar to the one shown in Fig. 10, except that in the embodiment shown in Fig. 11 pre-combustion chamber upper part 70 includes a first fuel passage 781 and a second fuel passage 782. By using two fuel passages instead of just one fuel passage, the swirl imparted on the flow may be enhanced. Furthermore, first and second fuel passages 781, 782 extend along a respective fuel passage axis 791, 792. First fuel passage 781 has a first angle α with respect to radial direction 401 of longitudinal axis 63, and second fuel passage 782 has a second angle β with respect to radial direction 402 of longitudinal axis 63. In some embodiments, as shown in Fig. 11, first and second angles α, β may be equal. In other embodiments, first and second angles α, β may not be equal.

Pre-combustion chamber upper part 70 includes a first fuel supply channel 761 and a second fuel supply channel 762. First and second fuel supply channels 761, 762 are in fluid connection with control valve receiving portion 73 via control valve connection portion 75 (shown in Fig. 3). First fuel supply channel 761 is in fluid connection with first fuel passage 781 via a first fuel accumulating chamber 771, and second fuel supply channel 762 is in fluid connection with second fuel passage 782 via a second fuel accumulating chamber 772.

Moreover, first fuel supply channel 761 merges with first fuel passage 781, and second fuel supply channel 762 merges with second fuel passage 782. Thus, first fuel accumulating chamber 771 is defined solely by the merging region of first fuel supply channel 761 and first fuel passage 781, and second fuel accumulating chamber 772 is defined solely by the merging region of second fuel supply channel 762 and second fuel passage 782.

In some embodiments, pre-combustion chamber upper part 70 may include more than two fuel supply channels merging with a respective fuel passage, depending on the size of control valve connection portion 75.

Depending on the flow rates of fuel supplied to pre-combustion chamber 68 and the dimensions of pre-combustion chamber 68, the at least one fuel passage 78 may be sized such that flames generated within pre-combustion chamber 68 are extinguished in the at least one fuel passage 78 and thus, a flashback of flames in the at least one fuel accumulating chamber 77, or the at least one fuel supply channel 76 may be prevented. Particularly, the pre-combustion chamber upper and lower part bodies 71, 82 including the at least one fuel passage 78 may absorb flame heat, thereby quench the flames and eventually extinguish the flames. Since the flames may be extinguished in the at least one fuel passage, ignition of the remaining fuel within the fuel passages may be prevented which may lead to less generation of soot.

### Industrial Applicability

In the following, operation procedure of internal combustion engine 10 comprising pre-combustion chamber assembly 60 as exemplary disclosed herein is described with respect to Fig. 1 to 11. Internal combustion engines 10 applicable to the disclosed procedure are internal combustion engines of any type using a pre-combustion chamber.

During operation of internal combustion engine 10, preferably shortly after a closing timing of engine valves 30 or when piston 16 is near bottom-dead-center position, fuel, such as gaseous fuel, is supplied to pre-combustion chamber 68 via the at least one fuel supply channel 76, the at least one fuel accumulating chamber 77, and the at least one fuel passage 78 for flushing pre-combustion chamber 68.

Because the at least one fuel passage 78 extends in a plane substantially perpendicular to longitudinal axis 63, all fuel supplied to pre-combustion chamber 68 via the at least one fuel passage 78 has a momentum component solely in the plane perpendicular to longitudinal axis 63. As a consequence, fuel admitted to pre-combustion chamber 68 does not leave pre-combustion chamber 68 through orifices 83, but flushes pre-combustion chamber 68 efficiently.

Then, during the compression stroke of internal combustion engine 10, at least some amount of a fuel-air mixture admitted to main combustion chamber 26 during an intake stroke is forced into pre-combustion chamber 68 via orifices 83. Due to the fuel already present in pre-combustion chamber 68, the fuel-air mixture is enriched, which supports ignition of the fuel-air mixture and, hence, an ignition event in pre-combustion chamber 68.

In some embodiments, fuel may be supplied to pre-combustion chamber 68 via the at least one fuel supply channel 76, the at least one fuel accumulating chamber 77, and the at least one fuel passage 78 shortly before the ignition event is initiated, thus, shortly before piston 16 reaches top-dead-center position. In case fuel is supplied shortly before the ignition event is initiated, the fuel-air mixture admitted to pre-combustion chamber 68 is enriched locally in the vicinity of the spark plug. As a consequence, lean mixtures of fuel and air may be ignited more reliably and fuel may be saved during operation of internal combustion engine 10.

In case the at least one fuel passage 78 extends in a skew manner with respect to longitudinal axis 63 (see Fig. 5, 9 to 11), a swirl motion may be imparted on the fuel supplied to pre-combustion chamber 68 via the at least one fuel passage 78. The imparted swirl may lead to a better mixing between the fuel-air mixture and the injected fuel.

In case multiple fuel passages 78 are provided in the pre-combustion chamber upper part body 71 and/or depending on the flow rates of fuel admitted to pre-combustion chamber 68, fuel passages 78 are sized such that flames generated within pre-combustion chamber 68 during the ignition event may be prevented from propagating back into the at least one fuel accumulating chamber 77, and, hence, into the at least one fuel supply channel 76. For example, the fuel passages 78 may have a surface-to-volume ratio that is sufficient for absorbing flame heat, thereby quenching the flames and, hence, prevent any flame flashback.

Generally, the at least one fuel accumulating chamber and/or the at least one fuel passage may be provided at least partially in one of the pre-combustion chamber upper and lower parts. Also, the at least one fuel accumulating chamber 77 may be formed in any of the embodiments described herein such that the fuel accumulating chamber is defined solely by a merging region of the at least one fuel supply channel and the at least one fuel passage.

Generally, angles α and β refer to absolute values. Thus, angles α and β include positive and negative values.

Although the preferred embodiments of this invention have been described herein, improvements and modifications may be incorporated without departing from the scope of the following claims.

## Claims

1. A pre-combustion chamber assembly (60) for an internal combustion engine (10), the pre-combustion chamber assembly (60) comprising:
a pre-combustion chamber lower part (80) defining at least a portion of a pre-combustion chamber (68);
a pre-combustion chamber upper part (70) defining a remaining portion of the pre-combustion chamber (68) and being mountable to the pre-combustion chamber lower part (80), the pre-combustion chamber upper part (70) including at least one fuel supply channel (76; 761, 762), the pre-combustion chamber lower part (80) and the pre-combustion chamber upper part (70) defining a longitudinal axis (63) of the pre-combustion chamber assembly (60);
at least one fuel accumulating chamber (77) disposed in at least one of the pre-combustion chamber upper part (70) and the pre-combustion chamber lower part (80) and at least partially circumferentially extending about the longitudinal axis (63), the at least one fuel accumulating chamber (77) being fluidly connected to the at least one fuel supply channel (76; 761, 762); and
at least one fuel passage (78; 781, 782) disposed in at least one of the pre-combustion chamber upper part (70) and the pre-combustion chamber lower part (80) and being configured to fluidly connect the at least one fuel accumulating chamber (77) to the pre-combustion chamber (68), **characterised in that** each of the at least one fuel passage (78; 781, 782) extends along a respective fuel passage axis (79; 791, 792) lying substantially in a plane perpendicular to the longitudinal axis (63).

2. The pre-combustion chamber assembly (60) according to claim 1, wherein the at least one fuel passage (78; 781, 782) is configured to deliver fuel solely in the plane perpendicular to the longitudinal axis (63).

3. The pre-combustion chamber assembly (60) according to any one of the preceding claims, wherein the respective fuel passage axis (79) extends in radial direction with respect to the longitudinal axis (63).

4. The pre-combustion chamber assembly (60) according to any one of claims 1 and 2, wherein the respective fuel passage axis (79) extends in a skew manner with respect to the longitudinal axis (63) for producing a swirling flow in the pre-combustion chamber (68).

5. The pre-combustion chamber assembly (60) according to claim 4, wherein an angle (α) between the respective fuel passage axis (791, 792) and a corresponding radial direction (401, 402) of the longitudinal axis (63) is in a range from about 0° to about ±60°.

6. The pre-combustion chamber assembly (60) according to claim 4, wherein the respective fuel passage axes (791, 792) intersect at a common point (793) or are parallel.

7. The pre-combustion chamber assembly (60) according to claim 6, wherein, when the respective fuel passage axes (791, 792) intersect at a common point (793), the common point (793) is disposed within the at least one fuel accumulating chamber (77).

8. The pre-combustion chamber assembly (60) according to any one of the preceding claims, wherein the at least one fuel passage (78) includes a first fuel passage (781) extending along a first fuel passage axis (791), and a second fuel passage (782) extending along a second fuel passage axis (792), wherein the first fuel passage axis (791) forms a first angle (α) with a corresponding radial direction (401) of the longitudinal axis (63), and the second fuel passage axis (792) forms a second angle (β) with a corresponding radial direction (402) of the longitudinal axis (63), the second angle (β) being different from the first angle (α) or being equal to the first angle (α).

9. The pre-combustion chamber assembly (60) according to any one of the preceding claims, wherein the at least one fuel passage (78; 781, 782) is configured to have a surface-to-volume ratio sufficient for absorbing flame heat produced in the pre-combustion chamber (68).

10. The pre-combustion chamber assembly (60) according to any one of claims 6 to 9, wherein the at least one fuel supply channel (76) includes a first fuel supply channel (761) and a second fuel supply channel (762), the first fuel supply channel (761) being in fluid connection with a first fuel passage (781) via a first fuel accumulating chamber (771), and the second fuel supply channel (762) being in fluid connection with a second fuel passage (782) via a second fuel accumulating chamber (772).

11. The pre-combustion chamber assembly (60) according to any one of the preceding claims, wherein the at least one fuel accumulating chamber (77) is defined by a merging region of the at least one fuel passage (78; 781, 782) and the at least one fuel supply channel (76; 761, 762).

12. The pre-combustion chamber assembly (60) according to any one of the preceding claims, wherein the at least one fuel accumulating chamber (77) is a pocket formed in at least one of the pre-combustion chamber upper part (70) and the pre-combustion chamber lower part (80).

13. An internal combustion engine (10) comprising:
at least one cylinder (14) reciprocally receiving a piston (16), the at least one cylinder (14) and the piston (16) delimiting at least one main combustion chamber (26); and
at least one pre-combustion chamber assembly (60) according to any one of the preceding claims, the at least one pre-combustion chamber assembly (60) at least partially protruding into the at least one main combustion chamber (26).

## Patentansprüche

1. Vorverbrennungskammeranordnung (60) für einen Innenverbrennungsmotor (10), wobei die Vorverbrennungskammeranordnung (60) folgendes umfasst:
ein Vorbrennungskammerunterteil (80), das wenigstens einen Abschnitt einer Vorverbrennungskammer (68) definiert;
ein Vorverbrennungskammeroberteil (70), das einen verbleibenden Abschnitt der Vorverbrennungskammer (68) definiert, und das an dem Vorverbrennungskammerunterteil (80) angebracht werden kann, wobei das Vorverbrennungskammeroberteil (70) wenigstens einen Kraftstoffzufuhrkanal (76; 761, 762) einschließt, wobei das Vorverbrennungskammerunterteil (80) und das Vorverbrennungskammeroberteil (70) eine Längsachse (63) der Vorverbrennungskammeranordnung (60) definiert;
wenigstens eine Kraftstoffsammelkammer (77), die in wenigstens einem des Vorverbrennungsoberteils (70) und des Vorverbrennungsunterteils (80) angeordnet ist, und sich wenigstens teilweise umlaufend um die Längsachse (63) erstreckt, wobei die wenigstens eine Kraftstoffsammelkammer (77) fließend mit dem wenigstens einen Kraftstoffzufuhrkanal (76; 761, 762) verbunden ist; und
wenigstens einen Kraftstoffdurchgang (78; 781, 782), der in wenigstens einem des Vorverbrennungsoberteils (70) und des Vorverbrennungsunterteils (80) angeordnet ist, und konfiguriert ist, um die wenigstens eine Kraftstoffsammelkammer (77) mit der Vorverbrennungskammer (68) fließend zu verbinden, **dadurch gekennzeichnet, dass**
jeder des wenigstens einen Kraftstoffdurchgangs (78; 781, 782) sich entlang einer jeweiligen Kraftstoffdurchgangsachse (79; 791, 792) erstreckt, die sich im Wesentlichen in einer Ebene senkrecht zu der Längsachse (63) befindet.

2. Vorverbrennungskammeranordnung (60) nach Anspruch 1, wobei der wenigstens eine Kraftstoffdurchgang (78; 781, 782) konfiguriert ist, um Kraftstoff nur in der zu der Längsachse (63) senkrechten Ebene zu liefern.

3. Vorverbrennungskammeranordnung (60) nach einem der vorstehenden Ansprüche, wobei die entsprechende Kraftstoffdurchgangsachse (79) sich in einer radialen Richtung mit Bezug auf die Längsachse (63) erstreckt.

4. Vorverbrennungskammeranordnung (60) nach einem der Ansprüche 1 und 2, wobei die entsprechende Kraftstoffdurchgangsachse (79) sich in einer schrägen Weise mit Bezug auf die Längsachse (63) erstreckt, um eine Wirbelströmung in der Vorverbrennungskammer (68) zu erzeugen.

5. Vorverbrennungskammeranordnung (60) nach Anspruch 4, wobei ein Winkel (α) zwischen der jeweiligen Kraftstoffdurchgangsachse (791, 792) und einer entsprechenden radialen Richtung (401, 402) der Längsachse (63) in einem Bereich von ungefähr 0° bis ungefähr + 60° liegt.

6. Vorverbrennungskammeranordnung (60) nach Anspruch 4, wobei die jeweiligen Kraftstoffdurchgangsachsen (791, 792) sich an einem gemeinsamen Punkt (793) schneiden oder parallel sind.

7. Vorverbrennungskammeranordnung (60) nach Anspruch 6, wobei, wenn die jeweiligen Kraftstoffdurchgangsachsen (791, 792) sich an einem gemeinsamen Punkt (793) schneiden, der gemeinsame Punkt (793) in der wenigstens einen Kraftstoffsammelkammer (77) angeordnet ist.

8. Vorverbrennungskammeranordnung (60) nach einem der vorstehenden Ansprüche, wobei der wenigstens eine Kraftstoffdurchgang (78) einen ersten Kraftstoffdurchgang (781) einschließt, der sich entlang einer ersten Kraftstoffdurchgangsachse (791) erstreckt, und einen zweiten Kraftstoffdurchgang (782), der sich entlang einer zweiten Kraftstoffdurchgangsachse (792) erstreckt, wobei die erste Kraftstoffdurchgangsachse (791) einen ersten Winkel (α) mit einer entsprechenden radialen Richtung (401) der Längsachse (63) bildet, und die zweite Kraftstoffdurchgangsachse (792) einen zweiten Winkel (β) mit einer entsprechenden radialen Richtung (402) der Längsachse (63) bildet, wobei der zweite Winkel (β) von dem ersten Winkel (α) unterschiedlich oder gleich dem ersten Winkel (α) ist.

9. Vorverbrennungskammeranordnung (60) nach einem der vorstehenden Ansprüche, wobei der wenigstens eine Kraftstoffdurchgang (78; 781, 782) konfiguriert ist, um ein Oberflächen-zu-Volumen-Verhältnis aufzuweisen, das ausreicht, um in der Vorverbrennungskammer (68) erzeugte Flammenhitze zu absorbieren.

10. Vorverbrennungskammeranordnung (60) nach einem der Ansprüche 6 bis 9, wobei der wenigstens eine Kraftstoffzufuhrkanal (76) einen ersten Kraftstoffzufuhrkanal (761) und einen zweiten Kraftstoffzufuhrkanal (762) einschließt, wobei der erste Kraftstoffzufuhrkanal (761) mit einem ersten Kraftstoffdurchgang (781) über eine erste Kraftstoffsammelkammer (771) fließend verbunden ist, und der zweite Kraftstoffzufuhrkanal (762) mit einem zweiten Kraftstoffdurchgang (782) über eine zweite Kraftstoffsammelkammer (772) fließend verbunden ist.

11. Vorverbrennungskammeranordnung (60) nach einem der vorstehenden Ansprüche, wobei die wenigstens eine Kraftstoffsammelkammer (77) von einem Zusammenlegungsgebiet des wenigstens einen Kraftstoffdurchgangs (78; 781, 782) und des wenigstens einen Kraftstoffzufuhrkanals (76; 761, 762) definiert ist.

12. Vorverbrennungskammeranordnung (60) nach einem der vorstehenden Ansprüche, wobei die wenigstens eine Kraftstoffsammelkammer (77) eine Tasche ist, die in wenigstens einem des Vorverbrennungskammeroberteils (70) und des Vorverbrennungskammerunterteils (80) gebildet ist.

13. Innenverbrennungsmotor (10) umfassend:
wenigstens einen Zylinder (14), der einen Kolben (16) wechselseitig empfängt, wobei der wenigstens eine Zylinder (14) und der Kolben (16) wenigstens eine Hauptverbrennungskammer (26) begrenzen; und
wenigstens eine Vorverbrennungskammeranordnung (60) nach einem der vorstehenden Ansprüche, wobei die wenigstens eine Vorverbrennungskammeranordnung (60) wenigstens teilweise in wenigstens eine Hauptverbrennungskammer (2) ragt.

## Revendications

1. Ensemble formant chambre de précombustion (60) pour un moteur à combustion interne (10), l'ensemble formant chambre de précombustion (60) comprenant :
une partie inférieure de chambre de précombustion (80) définissant au moins une portion d'une chambre de précombustion (68) ;
une partie supérieure de chambre de précombustion (70) définissant une portion restante de la chambre de précombustion (68) et pouvant être montée sur la partie inférieure de chambre de précombustion (80), la partie supérieure de chambre de précombustion (70) incluant au moins un canal d'alimentation en carburant (76 ; 761, 762), la partie inférieure de chambre de précombustion (80) et la partie supérieure de chambre de précombustion (70) définissant un axe longitudinal (63) de l'ensemble formant chambre de précombustion (60) ;
au moins une chambre d'accumulation de carburant (77) disposée dans au moins une de la partie supérieure de chambre de précombustion (70) et de la partie inférieure de chambre de précombustion (80) et s'étendant au moins partiellement de manière circonférentielle autour de l'axe longitudinal (63), l'au moins une chambre d'accumulation de carburant (77) étant reliée fluidiquement à l'au moins un canal d'alimentation en carburant (76 ; 761, 762) ; et
au moins un passage de carburant (78 ; 781, 782) disposés dans au moins une de la partie supérieure de chambre de précombustion (70) et de la partie inférieure de chambre de précombustion (80) et étant configuré pour relier fluidiquement l'au moins une chambre d'accumulation de carburant (77) à la chambre de précombustion (68), **caractérisé en ce que**
chacun de l'au moins un passage de carburant (78 ; 781, 782) s'étend le long d'un axe de passage de carburant respectif (79 ; 791, 792) se situant sensiblement dans un plan perpendiculaire à l'axe longitudinal (63).

2. Ensemble formant chambre de précombustion (60) selon la revendication 1, dans lequel l'au moins un passage de carburant (78 ; 781, 782) est configuré pour délivrer du carburant seulement dans le plan perpendiculaire à l'axe longitudinal (63).

3. Ensemble formant chambre de précombustion (60) selon l'une quelconque des revendications précédentes, dans lequel l'axe de passage de carburant respectif (79) s'étend dans une direction radiale par rapport à l'axe longitudinal (63).

4. Ensemble formant chambre de précombustion (60) selon l'une quelconque des revendications 1 et 2, dans lequel l'axe de passage de carburant respectif (79) s'étend d'une façon inclinée par rapport à l'axe longitudinal (63) pour produire un flux tourbillonnant dans la chambre de précombustion (68).

5. Ensemble formant chambre de précombustion (60) selon la revendication 4, dans lequel un angle (α) entre l'axe de passage de carburant respectif (791, 792) et une direction radiale correspondante (401, 402) de l'axe longitudinal (63) est dans une plage allant d'environ 0° à environ ± 60°.

6. Ensemble formant chambre de précombustion (60) selon la revendication 4, dans lequel les axes de passage de carburant respectifs (791, 792) se croisent au niveau d'un point commun (793) ou sont parallèles.

7. Ensemble formant chambre de précombustion (60) selon la revendication 6, dans lequel, lorsque les axes de passage de carburant respectifs (791, 792) se croisent au niveau d'un point commun (793), le point commun (793) est disposé à l'intérieur de l'au moins une chambre d'accumulation de carburant (77).

8. Ensemble formant chambre de précombustion (60) selon l'une quelconque des revendications précédentes, dans lequel l'au moins un passage de carburant (78) inclut un premier passage de carburant (781) s'étendant le long d'un premier axe de passage de carburant (791), et un second passage de carburant (782) s'étendant le long d'un second axe de passage de carburant (792), dans lequel le premier axe de passage de carburant (791) forme un premier angle (α) avec une direction radiale correspondante (401) de l'axe longitudinal (63), et le second axe de passage de carburant (792) forme un second angle (β) avec une direction radiale correspondante (402) de l'axe longitudinal (63), le second angle (β) étant différent du premier angle (α) ou étant égal au premier angle (α).

9. Ensemble formant chambre de précombustion (60) selon l'une quelconque des revendications précédentes, dans lequel l'au moins un passage de carburant (78 ; 781, 782) est configuré pour avoir un rapport surface/volume suffisant pour absorber la chaleur de flamme produite dans la chambre de précombustion (68).

10. Ensemble formant chambre de précombustion (60) selon l'une quelconque des revendications 6 à 9, dans lequel l'au moins un canal d'alimentation en carburant (76) inclut un premier canal d'alimentation en carburant (761) et un second canal d'alimentation en carburant (762), le premier canal d'alimentation en carburant (761) étant en connexion fluidique avec un premier passage de carburant (781) via une première chambre d'accumulation de carburant (771), et le second canal d'alimentation en carburant (762) étant en connexion fluidique avec un second passage de carburant (782) via une seconde chambre d'accumulation de carburant (772).

11. Ensemble formant chambre de précombustion (60) selon l'une quelconque des revendications précédentes, dans lequel l'au moins une chambre d'accumulation de carburant (77) est définie par une région de fusion de l'au moins un passage de carburant (78 ; 781, 782) et de l'au moins un canal d'alimentation en carburant (76 ; 761, 762).

12. Ensemble formant chambre de précombustion (60) selon l'une quelconque des revendications précédentes, dans lequel l'au moins une chambre d'accumulation de carburant (77) est une poche formée dans au moins une de la partie supérieure de chambre de précombustion (70) et de la partie inférieure de chambre de précombustion (80).

13. Moteur à combustion interne (10) comprenant :
au moins un cylindre (14) recevant un piston (16) en va-et-vient, l'au moins un cylindre (14) et le piston (16) délimitant au moins une chambre de combustion principale (26) ; et
au moins un ensemble formant chambre de précombustion (60) selon l'une quelconque des revendications précédentes, l'au moins un ensemble formant chambre de précombustion (60) dépassant au moins partiellement dans l'au moins une chambre de combustion principale (26).
